# EUROPEAN PATENT SPECIFICATION

(11) **EP 3 503 328 B1**
(45) Date of publication and mention of the grant of the patent: **14.09.2022**
(21) Application number: 17209658.8
(22) Date of filing: 21.12.2017
(51) Int. Cl.: H02G 7/00, A01M 29/32

(54) **OVERLAND DISTRIBUTION LINE COVER ASSEMBLY, AND METHOD FOR INSTALLING AN OVERLAND DISTRIBUTION LINE COVER TO AN OVERLAND DISTRIBUTION LINE**
ÜBERLANDVERTEILUNGSLEITUNGSABDECKUNGSANORDNUNG UND VERFAHREN ZUR MONTAGE EINER ÜBERLANDVERTEILUNGSLEITUNGSABDECKUNG AN EINE ÜBERLANDVERTEILUNGSLEITUNG
ENSEMBLE DE COUVERTURE DE LA LIGNE DE DISTRIBUTION TERRESTRE ET PROCÉDÉ D'INSTALLATION D'UN RECOUVREMENT DE LIGNE DE DISTRIBUTION TERRESTRE SUR UNE LIGNE DE DISTRIBUTION TERRESTRE

(43) Date of publication of application: 26.06.2019
(73) Proprietor: TE Connectivity Ireland Limited, V14 AK60 Shannon (IE)
(72) Inventor: MCGOWAN, Brian, Quin, V9 5FX45 (IE); MULLIGAN, Jason, Kilcolgan (IE); NORMOYLE, Brendan, Limerick, V42 T923 (IE)
(74) Representative: Grünecker Patent- und Rechtsanwälte PartG mbB

(56) References cited:
- DE-U1- 9 414 366
- DE-U1- 29 804 595
- US-A- 5 873 324
- US-A1- 2016 172 829
- US-B1- 6 730 852

## Description

The invention relates to an overland distribution line cover assembly for covering an overland distribution line comprising at least one overland distribution line and at least one attachment clip for an overland distribution line cover, comprising an eye for receiving an electrical line, an opening for the insertion of the electrical line and an intermediate section connecting the opening with the eye. Moreover, the invention relates to a method for installing an overland distribution line cover assembly to an overland distribution line.

Overland distribution lines are used to distribute electricity, particularly in rural areas. One problem associated with such overland distribution line systems is that large birds can touch two phases of the electrical network simultaneously, causing them severe injury and/or damaging power line assets. This is avoided by the use of overland distribution line covers that cover the electrical lines, especially at posts where birds tend to rest. The current solutions, however, are either difficult to install or difficult to manufacture.

In order to provide a solution that can be manufactured and installed easily, the attachment clip further comprises at least one snap-fit member for fixing the attachment clip to the overland distribution line cover.

A corresponding overland distribution line cover assembly comprises at least one overland distribution line cover and at least one attachment clip according to the invention.

A method for installing an overland distribution line cover assembly to an overland distribution line comprises the step of snap-fitting the at least one attachment clip to the overland distribution line cover.

This solution allows an easy installation of the overland distribution line cover assemblies. The attachment clip can, for example, be attached to the overland distribution line cover in a production environment remote from the location of installation and, in particular, before the installation. During the later installation process, the overland distribution line cover assembly need only be slid over the overland distribution line and no further steps are necessary. The attachment clip and the overland distribution line cover can be produced separately, each in a one-step production process, unlike a previous solution in which the attachment clip had to be placed in a mould so that it was automatically integrated into a cover during the subsequent moulding of the cover. The fact that the attachment clip and the cover are two separate elements also allows a modular use. For example, differently shaped attachment members can be produced and attached to the same cover depending on the desired application. Moreover, the overland distribution line cover can be installed on an energised line using a hot stick. The modular design enables the overland distribution line cover to be used for either live or dead line applications. The addition of the attachment clips enables the safer hot stick application.

In an easily installable embodiment, the snap-fit member comprises a deflection arm with a securing nose protruding perpendicular to an insertion direction, the deflection arm running substantially in the insertion direction and being deflectable perpendicular to the insertion direction. This allows a safe and easy attachment of the attachment clip to the distribution line cover. The snap-fit member can comprise a spacing arm for spacing the deflection arm from further parts of the attachment clip. The spacing arm can help to facilitate the attachment of the attachment clip to the cover, as the deflection arm is then located at an outer side and is easily accessible for the cover. The further parts referred to here can, for example, be the intermediate section, the eye or the opening.

US6730852B1 shows covers for distribution lines coupled to an insulator including a main body of a flexible polymer material, wherein the main body is configured to be positioned adjacent the insulator and a line coupled to the insulator and at least one connector member is connected to the main body. In US2016172829A1, a protective conductor cover for a distribution line conductor includes an elongate cover body having a longitudinal axis and including first and second opposed, elongate sidewalls. DE9414366U1 and DE29804595U1 show bird protection caps for electrical lines. In US 5,873,324 A covers for overland lines are shown, which do not require any clips for attaching them to the line.

An object of the invention is to provide a safe solution that facilitates the attachment of the attachment clip to the cover.

According to the invention, this object is achieved when the snap-fit member comprises a reinforcement web for the spacing arm, and the intermediate section comprises at least one elastically deflectable leg and the snap-fit member is attached to the elastically deflectable leg.

In order to prevent the spacing arm from moving, compressing or stretching, the attachment clip comprises the reinforcement web for the spacing arm.

The intermediate section comprises at least one elastically deflectable leg to allow easy insertion of the electrical line through the intermediate section. The snap-fit member is attached to the elastically deflectable leg so that it is automatically deflected when the electrical line is inserted and the elastically deflectable leg is deflected. This can help to automatically open the cover that is connected to the snap-fit member. Such an automatic opening effect makes the insertion of the electrical line easier

The inventive solution can be improved by the following further improvements and advantageous embodiments, which are advantageous on their own and can be combined arbitrarily as desired.

The inventive solution is not limited to use in overland distribution lines, but can also be used in further applications in which an easy-to-install cover for an electrical line is advantageous. In the following, when the terms "electrical line" and "cover" will be used they refer to an overland distribution line or a overland distribution line cover. However, the terms can also relate to other types of electrical lines and covers. For example, the concept could be applied to overland or underground bare cable, i.e. in tunnels in mining or rail applications.

Advantageously, the attachment clip comprises more than one snap-fit member to allow a safe and reliable connection. It can, for example, have two snap-fit members. The two or more snap-fit members can be arranged symmetrically at the attachment clip, for example symmetrically around an insertion direction, to achieve a balanced distribution of forces.

In particular, the insertion direction can be a clip insertion direction for inserting the attachment clip into the distribution line cover. The insertion direction can, in addition or alternatively, be a line insertion direction along which the electrical line is inserted into the attachment clip. Advantageously, the clip insertion direction and the line insertion direction are parallel to one another in order to allow easy installation and to prevent the creation of sideways forces during the insertion of the electrical line that could otherwise loosen the connection between the attachment clip and the cover.

Advantageously, the deflection arm has a free end. This allows for easy deflection.

The securing nose can be located at an end of the deflection arm to allow a maximum deflection of the securing nose with little force.

In order to allow a safe attachment, the securing nose can provide a stop face facing against the insertion direction. The stop face can, in particular, be perpendicular to the insertion direction to maximise the retaining effect.

In an advantageous embodiment, the snap-fit member is located at an outer side of the attachment clip. In this way, the cover can easily be connected to the attachment clip. Specifically, the attachment clip can then be located at least partially in a space surrounded by the cover, thus allowing for a compact design. In an alternative configuration, the snap-fit member could be located at other part of the attachment clip, for example at an inner side of the attachment clip.

In order to facilitate the connection of the attachment clip and the cover, the snap-fit member can protrude further in a lateral direction than the eye. In this context, the lateral direction is the direction that is perpendicular to an insertion direction and perpendicular to an extension direction of the line. In particular, the width at the snap-fit member(s) in the lateral direction can be greater than at the eye. Thus, the snap-fit member(s) can also serve to automatically achieve a spacing of the cover around the eye.

In an advantageous embodiment, the attachment clip has an omega-shaped base body. This can ensure a good distribution of forces and a smooth insertion of the electrical line. The base body can, in particular, include the eye, the opening and the intermediate section.

In an alternative embodiment, the attachment clip can have a shape that is different from an omega. For example, the shape can have straight sections and resemble a keyhole.

The reinforcement web can end in a connection region between the deflection arm and the spacing arm, so that it can reinforce the connection between the spacing arm and the further element while still allowing movement of the deflection arm.

In a weight and material saving embodiment that still allows for sufficient reinforcement, the reinforcement web is a flat element with the extension plane of the reinforcement web being perpendicular to the extension direction of the electrical line.

Advantageously, the intermediate section comprises two elastically deflectable legs opposing each other or located opposite one another, wherein at least one snap-fit member protrudes from each leg. The cover can thus be safely attached and the electrical line can be inserted easily.

The attachment clip can comprise a retaining member for retaining the electric line in the eye. This can prevent the electrical line from exiting the eye and thus potentially loosening the cover from the electrical line. The retaining member can be embodied as a snap member for an easy operation. The attachment clip can comprise more than one retaining member.

In an advantageous development, the attachment clip comprises a positioning member for positioning the attachment clip in the cover. Precise positioning can increase the ease of operation and improve safety, as it prevents the attachment clip from moving inside the cover, in particular along an extension direction of the electrical line. It is thus not necessary to manually adjust the position of the attachment clip during the insertion. Further, the correct position of the attachment clip in the cover during its lifetime can be ensured.

The positioning member can comprise a protrusion protruding in an insertion direction. This can make insertion easy and safe, as the attachment clip is automatically positioned correctly during the insertion process due to the fact that the force for inserting the electrical line also pushes the positioning member so that it engages with a corresponding counter element on or in the cover, e.g. a recess in the cover.

In an alternative embodiment, the positioning member could protrude to a side.

In a further alternative embodiment, the positioning member can be a recess on the attachment clip that cooperates with a protrusion on the cover.

When the positioning member is located on the eye, the lever forces acting on the attachment clip are low due to the proximity to the electric line and the eye.

The positioning member can, especially, be located centrally at the attachment clip to achieve a good positioning effect. The positioning member can, for example, be located symmetrically to a symmetry axis or symmetry plane of the attachment clip.

The attachment clip can be monolithic, i.e. it is a one-piece design in which all the sections are made from the same material and continuously connected. It is preferably an injection moulded piece.

The attachment clip can, in one embodiment, be substantially symmetrical. This can allow an easy assembly of the overland distribution line cover assembly, as the attachment clip can be inserted in several equivalent insertion positions without the need to adjust the rotational position before insertion.

In an alternative embodiment, the attachment clip is not symmetric. This can for example ensure that the correct orientation during assembly. For example, if more than one snapfit member is present, the two can be different. Further, for example positioning members can be offset relative to an extension direction of the overland distribution line cover and/or the cable.

The overland distribution line cover can comprise at least one counter snap-fit member adapted to cooperate with the snap-fit member of the attachment clip. Such a counter snap-fit member can comprise counter stop faces for engagement with stop faces of the attachment clip.

The overland distribution line can, in particular, be adapted to allow movement of the deflection arm during the insertion.

In the following, the inventive solutions will be explained in more detail and with reference to the drawings. The features shown in the further development and advantageous embodiments can be combined as desired and are advantageous on their own.

In the figures:
- Fig. 1: shows a schematic perspective view of an overland distribution line cover assembly installed over an electrical line;
- Fig. 2: shows a schematic perspective view of an attachment clip;
- Fig. 3: shows a schematic perspective with a partial cut view of an attachment clip during insertion into the cover;
- Fig. 4: shows a schematic sectional side view of the attachment clip in the cover;
- Fig. 5: shows a schematic perspective view of a step in the installation of the overland distribution line cover assembly onto the electrical line;
- Fig. 6: shows a schematic perspective view of a further step in the installation of the overland distribution line cover onto the electrical line;
- Fig. 7: shows a schematic perspective with a partial cut view of a step in the installation of the overland distribution line cover assembly over the electrical line;
- Fig. 8: shows a schematic perspective with a partial cut view of a further step in the installation of the overland distribution line cover assembly over the electrical line.

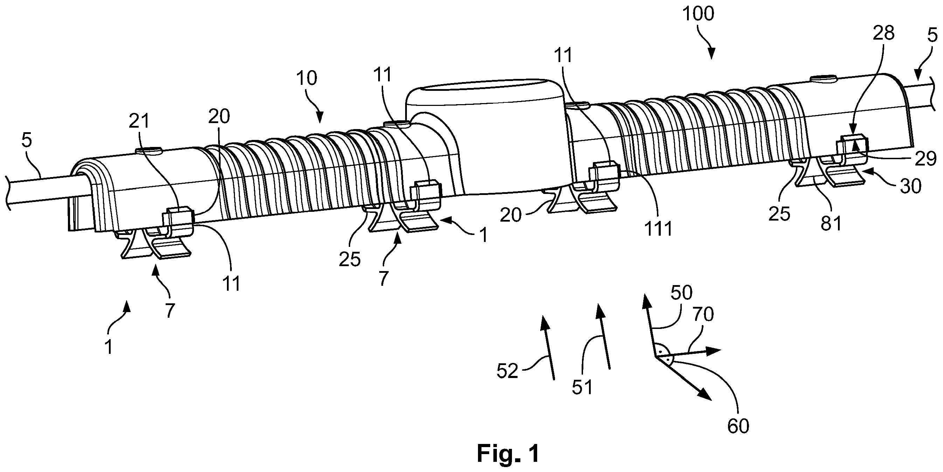

In Fig. 1, an overview of the installed overland distribution line cover assembly is given. In order to protect an electrical line 5 that can, specifically, be an overland distribution line that is used for distributing electricity, for example in rural areas, an overland distribution line cover assembly 100 is used. The electrical lines 5 used for overland electrical distribution are usually not insulated on the outside, and different phases are located in close proximity so that large birds could possibly come into contact with two different phases simultaneously and be electrocuted. To avoid this, the electrical line 5 is covered with the overland distribution line cover assembly 100 that is made from insulating material, preferably plastic and/or a polymeric material, and is installed around posts where birds tend to land in order to rest.

In Fig. 1, the overland distribution line cover assembly 100 is already fully installed over the electrical line 5. In this state, the electrical line 5 is no longer accessible, at least from above.

Attachment clips 1 are used for fixing the overland distribution line cover 10 to the electrical line 5. In the depicted embodiment, the overland distribution line cover assembly 100 comprises four attachment clips 1. However, the number of attachment clips 1 can vary depending on the application. Furthermore, additional modules or covers 10 that are either identical or similar to the one depicted in Fig. 1 can be added at one of the ends of the depicted overland distribution line cover 10 to provide protection over a greater length. Thus, the solution is modular and different lengths can be covered by simply adding further modular covers 10.

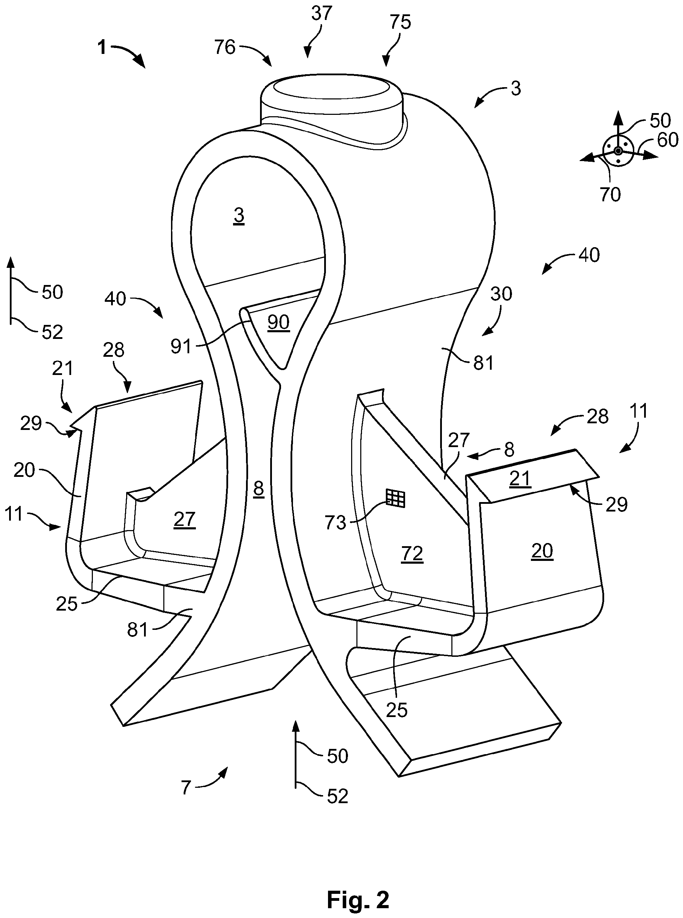

In Fig. 2, the attachment clip is shown in an enlarged view. The attachment clip 1 comprises an eye 3 for receiving the electrical line 5. The eye 3 has an at least partially cylindrical shape to accommodate cylindrical electrical lines 5. The attachment clip 1 further comprises an opening 7 for insertion of the electrical line 5, and an intermediate section 8 that connects the opening 7 with the eye 3. The electrical line can thus be inserted into the opening 7 and is then guided through the intermediate section 8 into the eye 3.

The attachment clip 1 further comprises a snap-fit member 11 for fixing the attachment clip 1 to the overland distribution line cover 10. The snap-fit member 11 enables easy attachment. Further, if desired, the attachment clip 1 can also be removed from the cover 10, for example if the attachment clip 1 is broken and has to be exchanged or the cover 10 is supposed to be used for a different application in which a different attachment clip 1 should be used. Different attachment clips 1 can, for example, differ in the size of the eye 3, so that differently sized electric lines 5 can be accommodated safely.

In this embodiment, the snap-fit member 11 is located at an outer side 40 of the attachment clip 1, so that the attachment clip 1 can easily be connected to the cover 10.

The attachment clip 1 comprises a base body 30 that in this embodiment comprises the opening 7, the intermediate section 8 and the eye 3. The base body 30 has roughly the shape of the Greek letter omega. The attachment clip 1 basically comprises only strip-like, flat sections to achieve a lightweight construction.

The attachment clip 1 can be an injection moulded part made from a plastic, polymeric or composite material.

The depicted embodiment has a monolithic construction, meaning that the entire attachment clip 1 is one single piece made from one single material. This simplifies production.

The electrical line 5 can be inserted into the attachment clip 1 along an insertion direction 50, in particular the line insertion direction 52 that runs from the opening 7 through the intermediate section 8 to the eye 3. The electrical line 5 is then held in the eye. The attachment clip 1 comprises a retaining member 90 embodied as a snap member 91 to retain the electrical line 5 in the eye 3. The retaining member 90 is embodied as a flap with a free end that can be deflected elastically and snaps into place behind the electrical line 5 once it is located in the eye 3.

This snap-fit member 11 comprises a deflection arm 20. A securing nose 21 is located at a free and 28 of the deflection arm 20. The snap-fit member 11 can thus cooperate with a corresponding counter snap-fit member 111 on the cover 10. To ensure that the two engage safely, the snap-fit member 11 has a stop face 29 located at the securing nose 21, the stop face 29 facing against the clip insertion direction 52. Thus, a form fit or positive fit is achieved once the snap-fit member 11 engages with the counter snap-fit member 111. The deflection arm 20 is deflected during insertion of the attachment clip 1 into the cover 10 towards the intermediate section 8, and the securing nose 21 snaps back once the attachment clip 1 has been fully inserted into the cover 10.

To space the deflection arm 20 away from further parts of the attachment clip 1 and to thereby ensure easy insertion into the cover 10, the attachment clip 1 comprises a spacing arm 25. The spacing arm 25 runs substantially in a lateral direction 17 that is perpendicular to the insertion direction 50 and an extension direction 70 of the electrical line 5. In the embodiment shown here, the deflection arm 20 is slightly inclined to the insertion direction 50. The two deflection arm 20 form a wedge to simplify the insertion into the cover 10.The further parts here refer in particular to the intermediate section 8, the eye 3 and the opening 7.

The attachment clip 1 further comprises a reinforcement web 27, so that the spacing arm 25 cannot move relative to the further parts during insertion. The spacing reinforcement web 27 is embodied as a flat element 72. The flat element 22 is planar and the plane 73 of the flat element 72 is perpendicular to an extension direction 70 of the electrical line 5. The plane 73 thus is parallel to the insertion direction 50 and the lateral direction 60, and can thus provide stability along these two directions, especially during insertion of the electrical line 5 into the attachment clip 1 and insertion of the attachment clip 1 into the cover 10.

The reinforcement web 27 ends in a connection region between the deflection arm 20 and the spacing arm 25, so that it is still possible to deflect the deflection arm 20 while providing sufficient stability for the spacing arm 25.

At the intermediate section 8, the attachment clip 1 comprises elastically deflectable legs 81 that can be elastically deflectable against or relative to each other to allow insertion of the electrical line 5.

The attachment clip 1 comprises two snap-fit members 11 that are located on opposite sides of the attachment clip 1 to allow a good distribution of forces during an insertion process. Each of the snap-fit members 11 is attached to one elastically deflectable leg 81 so that the snap-fit members 11 and the cover 10 are automatically spread apart and separated when the electrical line 5 is inserted.

The snap-fit members 11 protrude away from the elastically deflectable legs 81 so that sufficient space is available when the cover 10 is attached to the attachment clip 1. This makes installation easy.

The attachment clip 1 also comprises a positioning member 75 that is adapted for positioning the attachment clip 1 in the cover 10 along an extension direction 70 of the electrical line 5. The positioning member 75 also positions the attachment clip 1 in the lateral direction 60. The positioning member 75 is located at a centre 37 of a front section of the eye 3. Due to its proximity to the eye 3, the cable 5 is automatically positioned when the attachment clip 1 is positioned using the positioning member 75.

The positioning member 75 comprises a protrusion 76 that protrudes in the insertion direction 50, especially the line insertion direction 51 along which the electrical line 5 is inserted into the attachment clip 1. Due to the insertion forces used to insert the electrical line 5 into the attachment clip 1, the protrusion 76 is automatically brought into and held in engagement with a recess 105 acting as a counter element on the cover 10.

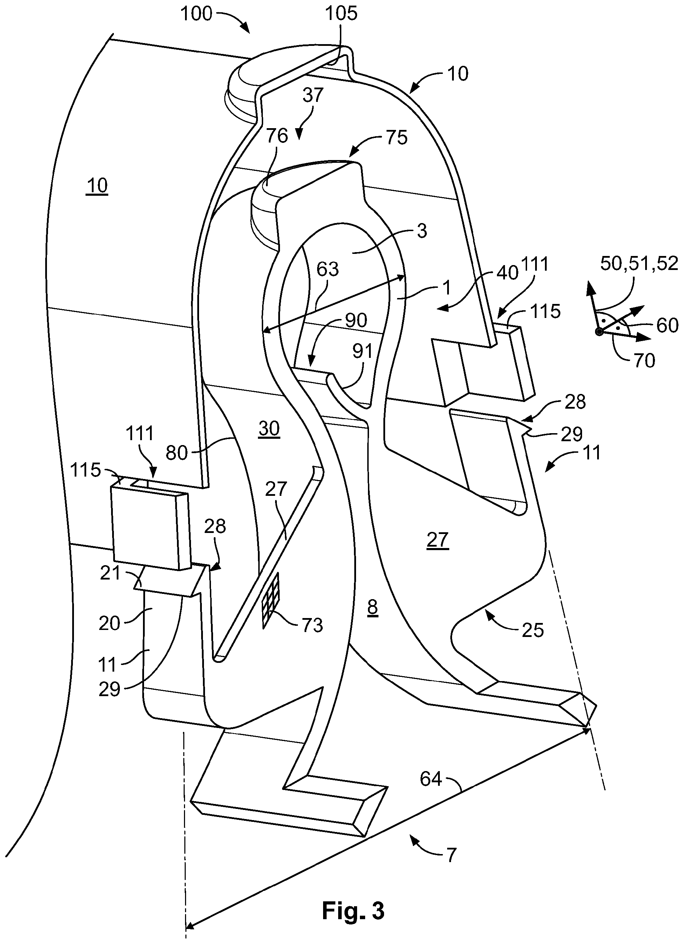

Figs. 3 to 6 show different steps of the installation process. Fig. 3 shows a sectional view of a step in which the attachment clip 1 is inserted along the clip insertion direction 52 into the cover 10. The cover 10 has counter snap-fit members 111 that are brought into engagement with the snap-fit member 11 on the attachment clip 1.

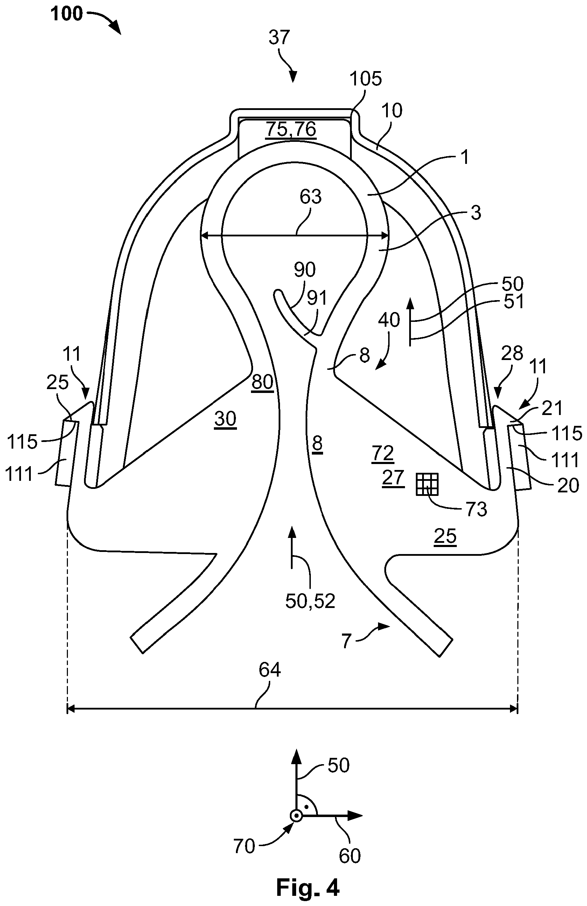

Once the attachment clip 1 is fully inserted into the cover 10 as can, for example, be seen in Fig. 4, the two are fixed to each other by the snap-fit members 11 and the counter snap-fit elements 111. The stop faces 29 abut counter stop faces 115 on the counter snap-fit member 111. Further, the attachment 1 is safely positioned in the cover 10 by the positioning member 75 that engages with the recess 105. As can be seen, each of the snap-fit members 11 protrudes further in the lateral direction 16 than the eye 3. The width 64 in the lateral direction 16, measured at the location of the snap-fit members 11, is greater than the width 63 at the eye 3.

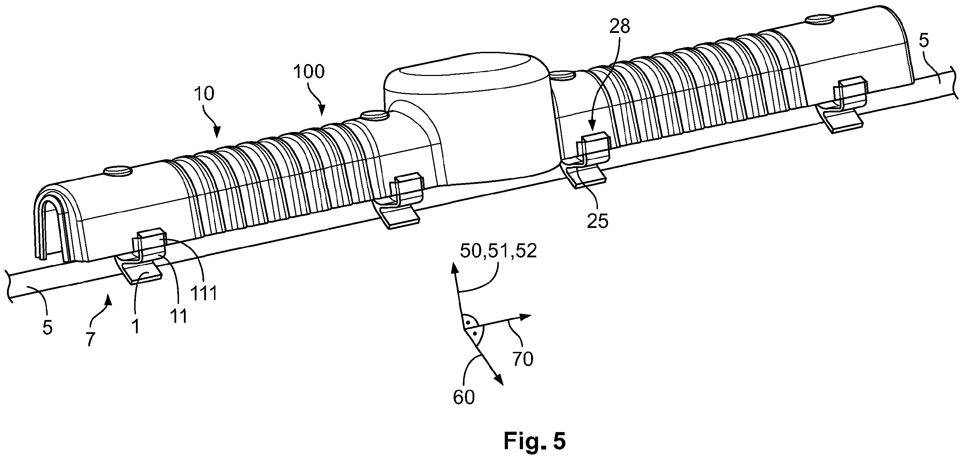

The overland distribution line cover assembly 100 can now be slid over the electrical line 5, as shown in Fig. 5. This can easily be achieved using a hot stick method, meaning that the overland distribution line cover assembly 100 can be pushed over the electrical line in a simple step, e.g. using an insulated stick. This method requires no additional safety measures such as switching off the electricity or providing further coverings for covering the lines of the other phases.

The electric line 5 is simply inserted into the overland distribution cover line assembly 100 along the line insertion direction 51, which is parallel to the clip insertion direction 51, both thus advantageously forming a common insertion direction 50.

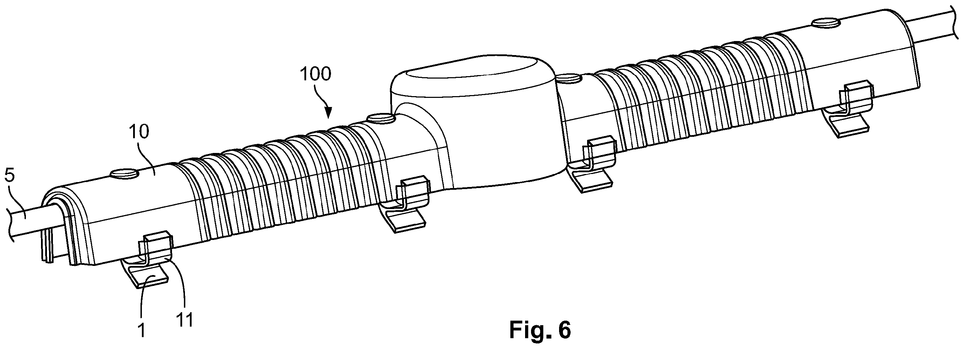

Fig. 6 shows the overland distribution line cover assembly 100 after installation has been completed. The electrical line 5 is now held in place and positioned in the cover 10 by the attachment clips 1.

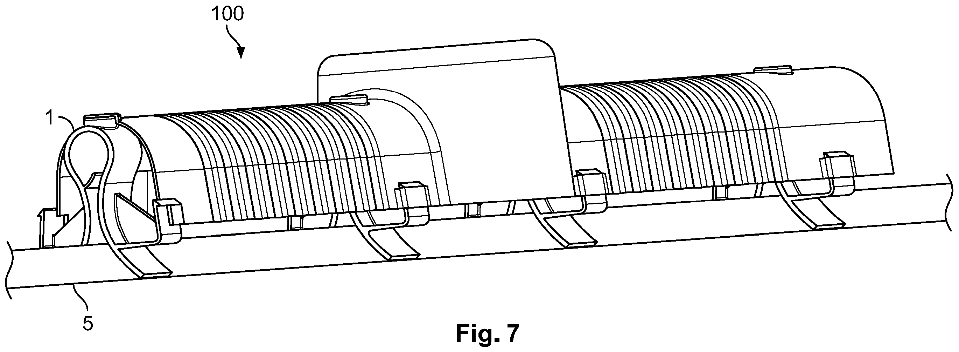

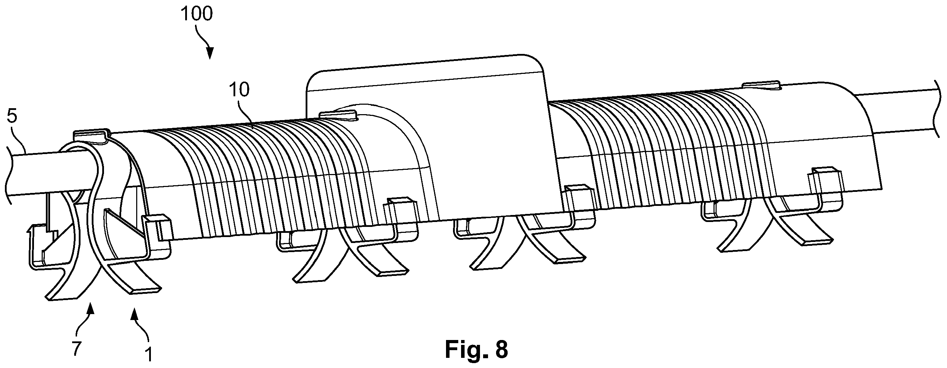

Figs. 7 and 8 show further views of the installation steps depicted in Figs. 5 and 6, in which parts of the overland distribution line cover have simply been removed and/or cut away so that the details are visible.

### REFERENCE NUMERALS

- 1: attachment clip
- 3: eye
- 5: electrical line
- 7: opening
- 8: intermediate section
- 10: overland line distribution cover
- 11: snap-fit member
- 20: deflection arm
- 21: securing nose
- 25: spacing arm
- 27: reinforcement web
- 28: free end
- 29: stop face
- 30: base body
- 37: centre
- 40: outer side
- 50: insertion direction
- 51: line insertion direction
- 52: clip insertion direction
- 60: lateral direction
- 63: width
- 64: width
- 70: extension direction
- 72: flat element
- 73: extension plane
- 75: positioning member
- 76: protrusion
- 81: leg
- 90: retaining member
- 91: snap member
- 100: overland distribution line cover assembly
- 105: recess
- 111: counter snap-fit member
- 115: counter stop face

## Claims

1. Overland distribution line cover assembly (100) for covering an overland distribution line (5), comprising at least one overland distribution line cover (10) and at least one attachment clip (1) for the overland distribution line cover (10), comprising an eye (3) for receiving an electrical line (5), an opening (7) for insertion of the electrical line (5) and an intermediate section (8) connecting the opening (7) with the eye (3), wherein the attachment clip (1) further comprises at least one snap-fit member (11) for fixing the attachment clip (1) to the overland distribution line cover (10), wherein the snap-fit member (11) comprises a deflection arm (20) with a securing nose (21) protruding perpendicular to an insertion direction (50), the deflection arm (20) running substantially in the insertion direction (50) and being deflectable perpendicular to the insertion direction (50), wherein the snap-fit member (11) comprises a spacing arm (25) for spacing the deflection arm (20) from further parts of the attachment clip (1), **characterized in that** the snap-fit member (11) comprises a reinforcement web (27) for the spacing arm (25), and that the intermediate section (8) comprises at least one elastically deflectable leg (81) and the snap-fit member (11) is attached to the elastically deflectable leg (81).

2. Overland distribution line cover assembly (100) according to claim 1, wherein the snap-fit member (11) protrudes further in a lateral direction (16) than the eye (3).

3. Overland distribution line cover assembly (100) according to one of claims 1 or 2, wherein the attachment clip (1) has an omega-shaped base body (30).

4. Overland distribution line cover assembly (100) according to one of claims 1 to 3, wherein the reinforcement web (27) is a flat element (72) with the extension plane (73) of the reinforcement web (27) being perpendicular to the extension direction (17) of the electrical line (5).

5. Overland distribution line cover assembly (100) according to one of claims 1 to 4, wherein the intermediate section (8) comprises two elastically deflectable legs (81) opposing each other and at least one snap-fit member (11) protrudes from each leg (81).

6. Overland distribution line cover assembly (100) according to one of claims 1 to 5, wherein the attachment clip (1) comprises a positioning member (75) for positioning the attachment clip (1) in the cover (10).

7. Overland distribution line cover assembly (100) according to claim 6, wherein the positioning member (75) comprises a protrusion (76) protruding in an insertion direction (50).

8. Overland distribution line cover assembly (100) according to claim 6 or 7, wherein the position member (75) is located on the eye (3).

9. Overland distribution line cover assembly (100) according to one of claims 1 to 8, wherein the attachment clip (1) comprises a retaining member (90) for retaining the electric line (5) in the eye (3).

10. Overland distribution cover assembly (100) according to one of claims 1 to 9, wherein the overland distribution line cover (10) comprises at least one counter snap-fit member (111) adapted to cooperate with the snap-fit member (11) of the attachment clip (1).

11. Method for installing an overland distribution line cover assembly (100) according to one of claims 1 to 10 to an overland distribution line (5), comprising the step of snap-fitting the at least one attachment clip (1) to the overland distribution line cover (10).

## Patentansprüche

1. Abdeckungsanordnung (100) für eine Überland-Verteilerleitung zum Abdecken einer Überland-Verteilerleitung (5), umfassend wenigstens eine Abdeckung (10) für die Überland-Verteilerleitung sowie wenigstens eine Anbringungsklemme (1) für die Abdeckung (10) für die Überland-Verteilerleitung, umfassend eine Öse (3) zum Aufnehmen einer Stromleitung (5), eine Öffnung (7) zum Einführen der Stromleitung (5) und einen Zwischenabschnitt (8), der die Öffnung (7) mit der Öse (3) verbindet, wobei die Anbringungsklemme (1) des Weiteren wenigstens ein Einrastelement (11) zum Befestigen der Anbringungsklemme (1) an der Abdeckung (10) für die Überland-Verteilerleitung umfasst, das Einrastelement (11) einen Biege-Arm (20) mit einer senkrecht zu einer Einführrichtung (50) vorstehenden Arretiernase (21) aufweist, der Biege-Arm (20) im Wesentlichen in der Einführrichtung (50) verläuft und senkrecht zu der Einführrichtung (50) gebogen werden kann, das Einrastelement (11) einen Abstandshalte-Arm (25) zum Beabstanden des Biege-Arms (20) von weiteren Teilen der Anbringungsklemme (1) umfasst, **dadurch gekennzeichnet, dass** das Einrastelement (11) einen Verstärkungs-Steg (27) für den Abstandshalte-Arm (25) aufweist, und dass der Zwischenabschnitt (8) wenigstens einen elastisch biegbaren Schenkel (81) umfasst und das Einrastelement (11) an dem elastisch biegbaren Schenkel (81) angebracht ist.

2. Abdeckungsanordnung (100) für eine Überland-Verteilerleitung nach Anspruch 1, wobei das Einrastelement (11) in einer seitlichen Richtung (16) weiter vorsteht als die Öse (3).

3. Abdeckungsanordnung (100) für eine Überland-Verteilerleitung nach einem der Ansprüche 1 oder 2, wobei die Anbringungsklemme (1) einen omega-förmigen Grundkörper (30) hat.

4. Abdeckungsanordnung (100) für eine Überland-Verteilerleitung nach einem der Ansprüche 1 bis 3, wobei der Verstärkungs-Steg (27) ein flaches Teil (72) ist und die Ebene (73), in der sich der Verstärkungs-Steg (27) erstreckt, senkrecht zu der Verlaufsrichtung (17) der elektrischen Leitung (5) ist.

5. Abdeckungsanordnung (100) für eine Überland-Verteilerleitung nach einem der Ansprüche 1 bis 4, wobei der Zwischenabschnitt (8) zwei einander gegenüberliegende, elastisch biegbare Schenkel (81) umfasst und von jedem Schenkel (81) wenigstens ein Einrastelement (11) vorsteht.

6. Abdeckungsanordnung (100) für eine Überland-Verteilerleitung nach einem der Ansprüche 1 bis 5, wobei die Anbringungsklemme (1) ein Positionierelement (75) zum Positionieren der Anbringungsklemme (1) in der Abdeckung (10) umfasst.

7. Abdeckungsanordnung (100) für eine Überland-Verteilerleitung nach Anspruch 6, wobei das Positionierelement (75) einen Vorsprung (76) umfasst, der in einer Einführrichtung (50) vorsteht.

8. Abdeckungsanordnung (100) für eine Überland-Verteilerleitung nach Anspruch 6 oder 7, wobei sich das Positionierelement (75) an der Öse (3) befindet.

9. Abdeckungsanordnung (100) für eine Überland-Verteilerleitung nach einem der Ansprüche 1 bis 8, wobei die Anbringungsklemme (1) ein Halteelement (90) zum Halten der Stromleitung (5) in der Öse (3) umfasst.

10. Abdeckungsanordnung (100) für eine Überland-Verteilerleitung nach einem der Ansprüche 1 bis 9, wobei die Abdeckung (10) für die Überland-Verteilerleitung wenigstens ein Gegen-Einrastelement (111) umfasst, das zum Zusammenwirken mit dem Einrastelement (11) der Anbringungsklemme (1) eingerichtet ist.

11. Verfahren zum Installieren einer Abdeckungsanordnung (100) für eine Überland-Verteilerleitung nach einem der Ansprüche 1 bis 10 an einer Überland-Verteilerleitung (5), umfassend den Schritt des Einrastens der wenigstens einen Anbringungsklemme (1) an der Abdeckung (10) für die Überland-Verteilerleitung.

## Revendications

1. Ensemble couvercle de ligne de distribution terrestre (100) pour couvrir une ligne de distribution terrestre (5), comprenant au moins un couvercle de ligne de distribution terrestre (10) et au moins une attache de fixation (1) pour le couvercle de ligne de distribution terrestre (10), comprenant un œil (3) pour recevoir une ligne électrique (5), une ouverture (7) pour l'insertion de la ligne électrique (5) et une section intermédiaire (8) reliant l'ouverture (7) à l'œil (3), où l'attache de fixation (1) comprend en outre au moins un élément d'encliquetage (11) pour fixer l'attache de fixation (1) au couvercle de ligne de distribution terrestre (10), où l'élément d'encliquetage (11) comprend un bras de déviation (20) avec un nez de fixation (21) faisant saillie perpendiculairement à une direction d'insertion (50), le bras de déviation (20) s'étendant sensiblement dans la direction d'insertion (50) et pouvant être dévié perpendiculairement à la direction d'insertion (50), où l'élément d'encliquetage (11) comprend un bras d'écartement (25) pour écarter le bras de déviation (20) d'autres parties de l'attache de fixation (1), **caractérisé en ce que** l'élément d'encliquetage (11) comprend une nervure de renforcement (27) pour le bras d'écartement (25), et **en ce que** la section intermédiaire (8) comprend au moins une jambe élastiquement déformable (81) et l'élément d'encliquetage (11) est fixé à la jambe élastiquement déformable (81).

2. Ensemble couvercle de ligne de distribution terrestre (100) selon la revendication 1, dans lequel l'élément d'encliquetage (11) fait saillie plus loin dans une direction latérale (16) que l'œil (3).

3. Ensemble couvercle de ligne de distribution terrestre (100) selon l'une des revendications 1 ou 2, dans lequel l'attache de fixation (1) a un corps de base en forme d'oméga (30).

4. Ensemble couvercle de ligne de distribution terrestre (100) selon l'une des revendications 1 à 3, dans lequel la nervure de renforcement (27) est un élément plat (72) avec le plan d'extension (73) de la nervure de renforcement (27) perpendiculaire à la direction d'extension (17) de la ligne électrique (5).

5. Ensemble couvercle de ligne de distribution terrestre (100) selon l'une des revendications 1 à 4, dans lequel la section intermédiaire (8) comprend deux jambes pouvant être déviées élastiquement (81) opposées l'une à l'autre et au moins un élément d'encliquetage (11) fait saillie depuis chaque jambe (81).

6. Ensemble couvercle de ligne de distribution terrestre (100) selon l'une des revendications 1 à 5, dans lequel l'attache de fixation (1) comprend un élément de positionnement (75) pour positionner l'attache de fixation (1) dans le couvercle (10).

7. Ensemble couvercle de ligne de distribution terrestre (100) selon la revendication 6, dans lequel l'élément de positionnement (75) comprend une saillie (76) faisant saillie dans une direction d'insertion (50).

8. Ensemble couvercle de ligne de distribution terrestre (100) selon la revendication 6 ou 7, dans lequel l'élément de positionnement (75) est situé sur l'œil (3).

9. Ensemble couvercle de ligne de distribution terrestre (100) selon l'une des revendications 1 à 8, dans lequel l'attache de fixation (1) comprend un élément de retenue (90) pour retenir la ligne électrique (5) dans l'œil (3).

10. Ensemble couvercle de ligne de distribution terrestre (100) selon l'une des revendications 1 à 9, dans lequel le couvercle de ligne de distribution terrestre (10) comprend au moins un contre-élément d'encliquetage (111) adapté pour coopérer avec l'élément d'encliquetage (11) de l'attache de fixation (1).

11. Procédé d'installation d'un ensemble couvercle de ligne de distribution terrestre (100) selon l'une des revendications 1 à 10 sur une ligne de distribution terrestre (5), comprenant l'étape d'encliquetage de l'au moins une attache de fixation (1) sur le couvercle de ligne de distribution terrestre (10).
